# EUROPEAN PATENT APPLICATION

(11) **EP 4 541 661 A1**
(43) Date of publication of application: **23.04.2025**
(21) Application number: 23846180.0
(22) Date of filing: 06.07.2023
(51) Int. Cl.: B60Q 1/40, B62J 6/056, B62J 45/00, B62J 45/40

(54) **PROGRAM, DEVICE, TRAINING MODEL, AND METHOD**

(30) Priority: 25.07.2022 JP 2022117823
(71) Applicant: Murata Manufacturing Co., Ltd., Nagaokakyo-shi, Kyoto 617-8555 (JP)
(72) Inventor: TANAKA, Nobunari, Nagaokakyo-shi, Kyoto 617-8555 (JP)
(74) Representative: Stöckeler, Ferdinand
(86) International application number: PCT/JP2023/025192
(87) International publication number: WO 2024/024448

(57) **Abstract**

To accurately control a direction indicator of a motorcycle. A program causing a computer to execute acquiring traveling data of a motorcycle that is continuously measured for a predetermined period from at least one sensor; and determining a corresponding driving operation, which is a driving operation corresponding to the traveling data, based on the traveling data and a plurality of pieces of reference traveling data that is continuous for the predetermined period and is associated with each of a plurality of driving operations of the motorcycle.

## Description

### Technical Field

The present invention relates to a program, a device, a learning model, and a method.

### Background Art

A driver of a motorcycle uses a direction indicator (winker) in a case of making a right turn or a left turn (referred to as a right turn or the like) on a road or changing a lane during traveling. The direction indicator is used to indicate the driving intention of the driver to surrounding drivers or pedestrians and to realize safe driving. In the direction indicator of the motorcycle, first, the driver needs to make the direction indicator an on state (for example, blinking), and then the driver himself/herself needs to make the direction indicator an off state (for example, turning off) after the right turn or the like is ended. In this case, the driver may forget to operate the direction indicator, and the direction indicator may not be turned off or may be forgotten to be turned off. Patent Document 1 discloses a winker canceling device for avoiding forgetting to turn off a direction indicator.

### Citation List

### Patent Document

Patent Document 1: Japanese Patent Application Laid-Open No. 62-53256

### Summary of Invention

### Technical Problem

In the winker canceling device disclosed in Patent Document 1, control of turning off the winker is performed based on a rotation speed difference between a rotation speed of a front wheel and a rotation speed of a rear wheel generated during right turn and left turn. More specifically, the rotation speed difference at a certain time point is acquired each time, and the control of turning off the winker is performed based on the change. In a case where a value (instantaneous value) at a certain time point is used, it is determined whether the value exceeds a threshold value. However, in the case of a two-wheeled vehicle, since a vehicle body is inclined during the right and left turn according to the speed, there is a problem that it is difficult to make the determination because the threshold value needs to be changed according to the speed. In addition, since the two-wheeled vehicle has a large degree of freedom in a position that is able to be taken by the vehicle body with respect to a road width, there is a problem that an inadvertent movement is determined as the right and left turn.

The present invention has been made in view of such circumstances, and an object of the present invention is to provide a program and the like for accurately controlling a direction indicator of a motorcycle.

### Solution to Problem

A program according to an aspect of the present invention causing a computer to execute acquiring traveling data of a motorcycle that is continuously measured for a predetermined period from at least one sensor; and determining a corresponding driving operation, which is a driving operation corresponding to the traveling data, based on the traveling data and a plurality of pieces of reference traveling data that is continuous for the predetermined period and are associated with each of a plurality of driving operations of the motorcycle.

A device according to another aspect of the present invention including an acquisition unit that acquires traveling data of a motorcycle that is continuously measured for a predetermined period from at least one sensor; and a determination portion that determines a corresponding driving operation corresponding to the traveling data, based on the traveling data and a plurality of pieces of reference traveling data that is continuous for the predetermined period and are associated with each of a plurality of driving operations of the motorcycle.

A learning model according to another aspect of the present invention that is learned using teacher data that uses a plurality of pieces of reference traveling data of a motorcycle continuous for a predetermined period as an input and a driving operation associated with each of the plurality of pieces of reference traveling data as an output, in which the learning model causes a computer to function of outputting a corresponding driving operation which is a driving operation corresponding to the traveling data in response to an input of traveling data of the motorcycle measured continuously for the predetermined period.

A method according to another aspect of the present invention by a computer, including acquiring traveling data of a motorcycle that is continuously measured for a predetermined period from at least one sensor; and determining a corresponding driving operation corresponding to traveling data, based on the traveling data and a plurality of pieces of reference traveling data that is continuous for the predetermined period and are associated with each of a plurality of driving operations of the motorcycle.

### Advantageous Effects of Invention

According to the present invention, it is possible to provide a program or the like for accurately controlling a direction indicator of a motorcycle.

### Brief Description of Drawings

Fig. 1 is a block diagram of a motorcycle according to a first embodiment.
Fig. 2 is a diagram illustrating an outline of control in the motorcycle according to the first embodiment.
Fig. 3 is a diagram illustrating an outline of control in the motorcycle according to the first embodiment.
Fig. 4 is a flowchart for describing determination of a driving operation according to the first embodiment.
Fig. 5 is a diagram describing a learning model according to the first embodiment.
Fig. 6 is a diagram describing determination of a driving operation according to the first embodiment.
Fig. 7 is a flowchart describing a process of determining an end of the driving operation according to the first embodiment.
Fig. 8 is a diagram describing determination of the driving operation and determination of the end of the driving operation according to the first embodiment.
Fig. 9 is a block diagram of a motorcycle according to a second embodiment.

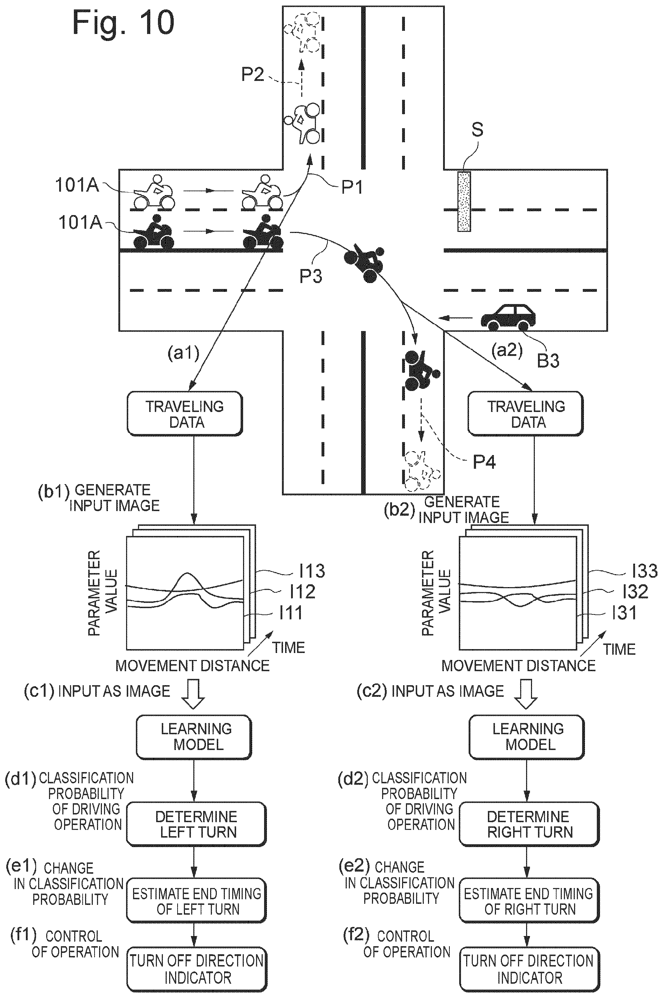

Fig. 10 is a diagram describing an outline of control in the motorcycle according to the second embodiment.
Fig. 11 is a diagram describing an example of a classification probability in the motorcycle according to the second embodiment.
Fig. 12 is a flowchart describing determination of a driving operation and determination of an end of the driving operation according to the second embodiment.
Fig. 13 is a block diagram of a motorcycle control system according to a third embodiment.
Fig. 14 is another block diagram of the motorcycle control system according to the third embodiment.
Fig. 15 is a graph illustrating an example of sensor values in a motorcycle control system according to the first to third embodiments.
Fig. 16 is a graph illustrating an example of a classification probability in the motorcycle control system according to the first to third embodiments.
Fig. 17 is a graph illustrating another example of sensor values in the motorcycle control system according to the first to third embodiments.
Fig. 18 is a graph illustrating an example of a case where sensor values in the motorcycle control system according to the first to third embodiments are binarized.

### Description of Embodiments

Hereinafter, embodiments of the present invention will be described. First, a reference example to be compared with the embodiment of the present invention will be described.

Regarding the determination of the right and left turn, in general, in a case of an automobile (four-wheeled vehicle), since the right and left turn is performed by rotating a steering wheel, an angle of the steering wheel is detected, and it is possible to determine that an operation of the right and left turn is performed based on a threshold value provided for the angle of the steering wheel. On the other hand, in a case of a motorcycle (two-wheeled vehicle), particularly in a case of traveling at a high speed, the vehicle body is inclined and rotated such that the vehicle body does not fall due to centrifugal force. In this case, a change in the handle angle is small according to the inclination of the vehicle body. Therefore, it is difficult to determine the right and left turn only by the handle angle. Therefore, it is necessary to determine the right and left turn based on a plurality of parameters including the speed, the inclination of the vehicle body, and the like in addition to the handle angle. On the other hand, in a case where the number of parameters used for the determination increases, there is a problem that it is difficult to set the parameters and the threshold value for determination.

In such a case, as a method of determining that the right and the left turn is performed in consideration of a correlation between the plurality of parameters, the use of an ensemble tree in the field of machine learning is considered. By using the ensemble tree, it is possible to set the probabilities of the right and left turn from instantaneous values of the plurality of parameters. On the other hand, since only the instantaneous values are used, noise with respect to the instantaneous values affects a determination result.

Further, in the case of a two-wheeled vehicle, since a width of the vehicle body is small compared to a width of the road, there is a degree of freedom of the vehicle body position on the road. Therefore, there is a possibility that it is determined that the right and left turn is performed due to an irregular movement such as moving on the road to the right and left. In order to prevent such a phenomenon, unlike the method of using the instantaneous value described above, a method of determining the right and left turn based on continuous data using a plurality of sensors is considered. For example, a movement trajectory of the vehicle body is able to be estimated from an integrated value of the sensor value using a self-position estimation technique. Accordingly, it is possible to estimate the cumulative movement distance or angle that cannot be known from the instantaneous value, and thus the influence of noise on the instantaneous value may be less likely to be received. However, in this case, since the steady-state error of the sensor value is also integrated, a problem is likely to occur in the determination accuracy as a result.

In view of the above, the present invention proposes the following embodiments to solve the problem.

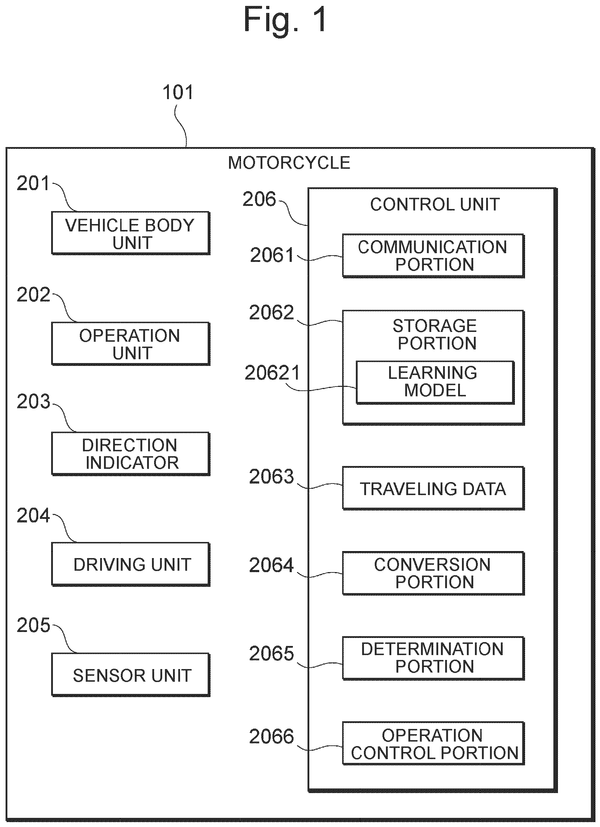

A first embodiment will be described. Fig. 1 is a block diagram of a motorcycle 101 according to the first embodiment.

The motorcycle 101 has a vehicle body unit 201, an operation unit 202, a direction indicator 203, a driving unit 204, a sensor unit 205, and a control unit 206.

The vehicle body unit 201 is a vehicle body of the motorcycle 101, and the motorcycle 101 is configured by attaching the operation unit 202, the direction indicator 203, the driving unit 204, the sensor unit 205, and the control unit 206 to the vehicle body unit 201.

The operation unit 202 is a device for a driver to operate the motorcycle 101. The operation unit 202 includes, for example, a handle that is held by the driver during driving, an accelerator for acceleration, a brake for deceleration, an operation unit for an operation of switching on and off the direction indicator 203, and the like.

The direction indicator 203 is a device that indicates a driving operation of the motorcycle 101 to a driver of another vehicle or a pedestrian in a case where the motorcycle 101 performs an operation such as a right turn, a left turn, and a lane change (driving operation). For example, the direction indicator 203 is a lamp attached to the motorcycle 101 that blinks.

The driving unit 204 is an engine or a motor, a wheel, and the like. The driving unit 204 drives the motorcycle 101 based on the operation of the driver through the operation unit 202 or the control from the control unit 206.

The sensor unit 205 is various devices that detect the traveling data of the motorcycle 101. The traveling data is, for example, a speed, an acceleration, an inclination, a wheel rotation speed, an opening degree of an accelerator, a brake input, a gear position, and the like of the motorcycle 101. The sensor unit 205 has a speed sensor, an acceleration sensor, a gravity sensor (inclination sensor), a tachometer (rotation speed sensor), and the like, and detects various traveling data. The sensor data is usually one-dimensional data, but two-dimensional data may be acquired using a camera or a radar. The sensor unit 205 does not need to acquire all the above-described traveling data and may acquire at least one or more pieces of traveling data. In addition, the type of traveling data is not limited to the above-described example.

The control unit 206 performs signal processing and information processing in the motorcycle 101. The control unit 206 includes a communication portion 2061, a storage portion 2062, a traveling data acquisition portion 2063, a conversion portion 2064, a determination portion 2065, and an operation control portion 2066. The control unit 206 is a computer that performs predetermined processing by executing a program stored in the storage portion 2062 via a processor.

The communication portion 2061 controls information communication in the motorcycle 101. For example, the communication portion 2061 performs wired or wireless communication with the sensor unit 205 to transmit and receive data with the sensor unit 205. Alternatively, the communication portion 2061 may control communication between the motorcycle 101 and an external update terminal. The update terminal transmits information for updating a program for operating the control unit 206 to the control unit 206, for example, and updates the program of the control unit 206.

The storage portion 2062 is, for example, a semiconductor memory. A learning model 20621 is stored in the storage portion 2062. The learning model 20621 inputs input data based on the traveling data and outputs a driving operation (corresponding driving operation) corresponding to the input data. In addition, the learning model 20621 also outputs a classification probability that the input data is classified as the corresponding driving operation. Details of the learning model 20621 will be described below.

The traveling data acquisition portion 2063 acquires the traveling data from the sensor unit 205. The traveling data acquisition portion 2063 acquires the traveling data continuously measured over a predetermined period. Here, the predetermined period is, for example, a period determined based on a movement distance of the motorcycle 101. Specifically, the period is a period required for the motorcycle 101 to move a certain distance. When the motorcycle 101 moves a certain distance, the traveling data acquisition portion 2063 performs sampling at intervals corresponding to the rotation of the wheel, for example, at equal intervals, and acquires the traveling data in a range from the start to the end of the movement as one set of traveling data.

The conversion portion 2064 converts the traveling data into input data to the determination portion 2065. For example, the conversion portion 2064 may plot the information on the traveling data on a horizontal axis with respect to, for example, the movement distance to obtain two-dimensional data (input two-dimensional data). In this case, the conversion portion 2064 generates input data to the determination portion 2065. The conversion portion 2064 generates, for example, a graph having the movement distance on the horizontal axis, which is generated by being converted such that the movement distance is a reference based on the wheel rotation speed based on the traveling data acquired by the traveling data acquisition portion 2063. The input data is generated as data in which a plurality of variables such as a speed, an inclination, and a handle angle is plotted in one graph. In addition, in a case where the traveling data is one-dimensional, the conversion portion 2064 may regard the graph as a two-dimensional image, and may convert the traveling data into two-dimensional data, for example, in a case where there is a frequency feature. As a method of converting the one-dimensional data into the two-dimensional data, for example, a method such as Fourier transform or wavelet transform is known, but the conversion method may be another method capable of classifying a final operation.

The determination portion 2065 determines the driving operation corresponding to the traveling data based on the traveling data. Specifically, the determination portion 2065 inputs the input data converted by the conversion portion 2064 to the learning model 20621, and acquires the corresponding driving operation and the classification probability from the learning model 20621.

The operation control portion 2066 controls the operation of the motorcycle 101 based on the classification probability of the corresponding driving operation. Specifically, the operation control portion 2066 determines the end of the driving operation of the right turn or the left turn based on the change in the classification probability. In a case where it is determined that the right turn or the left turn of the motorcycle 101 is ended, the operation control portion 2066 switches the direction indicator 203 from the on state to the off state.

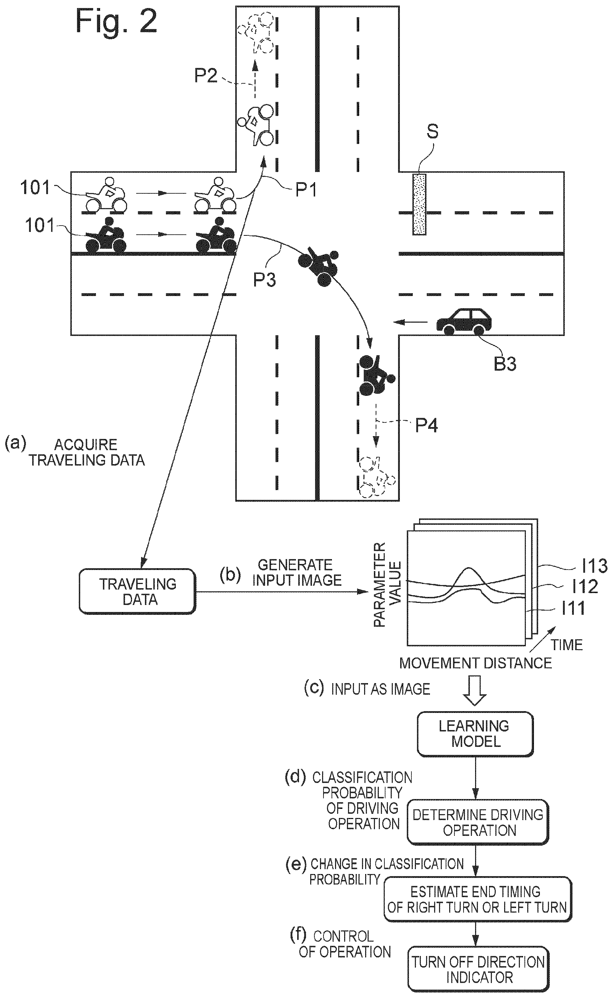

An outline of processing in the motorcycle 101 will be described with reference to Fig. 2.

In Fig. 2, an operation of the motorcycle 101 in a case where an intersection is viewed from above is schematically illustrated. In a case where a signal S indicates that the right turn and the left turn are possible, the motorcycle 101 turns left along a route P1 and progresses straight along a route P2. Alternatively, the motorcycle 101 turns right along a route P3 and progresses straight along a route P4.

In a case of the right turn and the left turn, the driver of the motorcycle 101 operates the operation unit 202 to turn on the direction indicator 203.

Here, a case where the motorcycle 101 turns left will be described as an example. In step (a), the traveling data acquisition portion 2063 acquires the traveling data of the motorcycle 101. In step (b), the conversion portion 2064 generates the input image based on the traveling data.

The processing of steps (a) and (b) is repeatedly performed during the traveling of the motorcycle 101. A plurality of input images is generated at different time points, such as input images I11, I12, and I13, for each certain movement distance.

In step (c), the determination portion 2065 inputs a certain input image (for example, the input image 111) to the learning model. In step (d), the learning model 20612 calculates the classification probability of the driving operation and determines the driving operation (corresponding driving operation) of the motorcycle based on the classification probability. The processing up to step (d) is performed for each of the plurality of input images.

In step (e), end timing of the left turn is estimated based on the change in the classification probability. In step (f), the control of the operation of the motorcycle 101 is performed based on the end timing, and the direction indicator 203 is turned off. So far, the case of the left turn has been described, but the same processing is performed in the case of the right turn.

In the motorcycle 101, the corresponding driving operation is determined based on the input image generated for each movement distance. Accordingly, for example, in the motorcycle 101, an influence of a waiting time caused by the fact that right turn waiting and left turn waiting are performed according to the state of the signal S or the fact that an opposite vehicle B3 is present and the need to temporarily stop in the intersection occurs is suppressed. This is because the movement distance does not change during the temporary stop. Accordingly, even in a case where the temporary stop or the like is performed, it is possible to determine the right turn or the left turn based on the traveling data with respect to the entire routes P1 and P3 in a case of the right turn or the left turn without being affected by the waiting time. Therefore, it is possible to increase the determination accuracy of the corresponding traveling state.

In addition, since the right turn or the like of the motorcycle is performed by inclining the vehicle body during high-speed traveling and is performed by operating the handle to change the direction of the wheel during low-speed traveling, it is necessary to select a variable according to the traveling state and to determine the right turn or the like based on the selected variable. Even in such a case, in the motorcycle 101, the determination accuracy of the corresponding driving operation is improved by determining the right turn or the like by using the input image generated based on the plurality of variables.

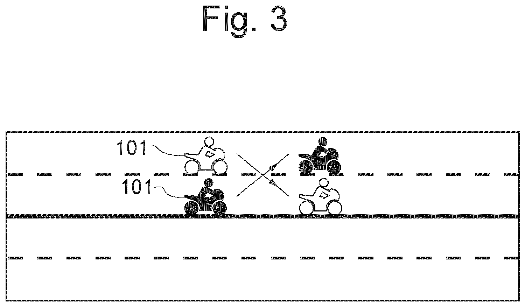

The learning model 20621 may be learned to distinguish between right lane change and left lane change in addition to the right turn and the left turn. For example, as illustrated in Fig. 3, the motorcycle 101 on a lane on a center side of the road may blink a direction indicator 203 indicating a left direction to perform left lane change. In this case, by distinguishing between the left turn and the left lane change, the left lane change is able to be prevented from being determined as the left turn, and the determination accuracy is able to be improved. The same applies to a case where the right turn and the right lane change are distinguished.

The learning model 20621 may be learned to determine one driving operation of "the motorcycle 101 is turning" without distinguishing between the right turn and the left turn. When the corresponding driving operation is determined to be "the motorcycle 101 is turning" and it is determined that turning of the motorcycle 101 is ended, the operation control portion 2066 may turn off the direction indicator 203.

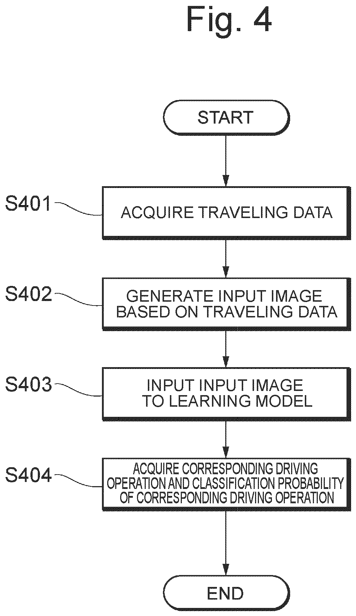

Details of processing and the learning model in the motorcycle 101 will be described with reference to Figs. 4 to 6. In the motorcycle 101, in a case where an operation of turning on the direction indicator 203 is performed, the determination using the learning model 20621 is performed.

Fig. 4 illustrates a flowchart of processing in the control unit 206.

**In** step S401, the traveling data acquisition portion 2063 acquires the traveling data of the motorcycle 101 from the sensor unit 205. In step S402, the conversion portion 2064 generates the input image based on the traveling data.

**In** step S403, the determination portion 2065 inputs the input image to the learning model 20621.

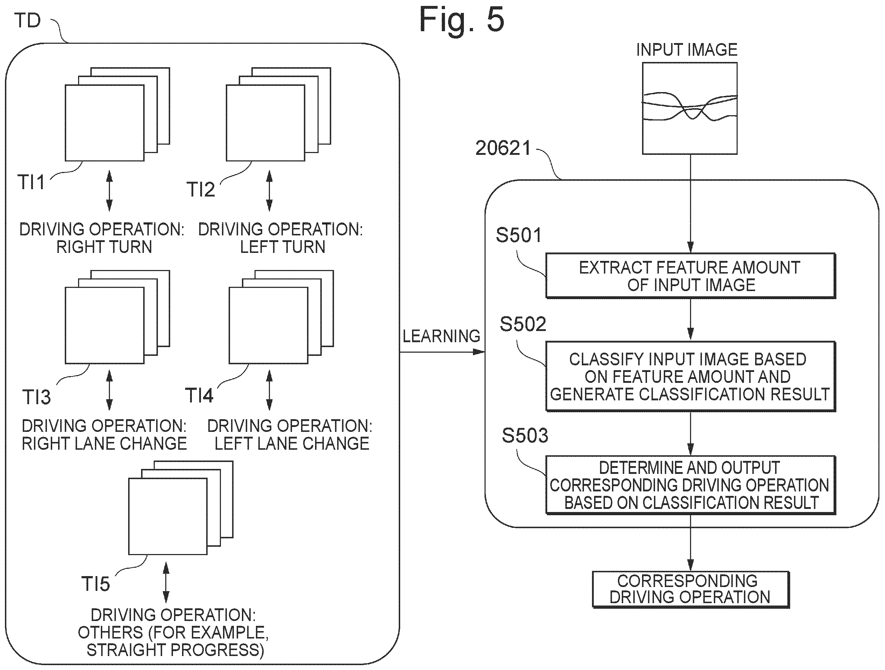

The learning model 20621 performs processing described with reference to Fig. 5. The learning model 20621 is a learning model that is learned by using teacher data that uses a plurality of pieces of reference traveling data as an input and a driving operation associated with each of the plurality of pieces of reference traveling data as an output. The learning model 20621 is learned using teacher data TD in which driving operation is associated with each of teacher image groups TI1, TI2, TI3, TI4, and TI5 which are groups of a plurality of teacher images generated based on the reference traveling data. The learning model 20621 is learned to input the plurality of teacher image groups TI1, TI2, TI3, TI4, and TI5 and output correct driving operations each corresponding thereto.

The reference traveling data is, for example, data measured by including a predetermined period from a state where the motorcycle turns on the direction indicator 203 for right turn to a state where the direction indicator 203 is turned off after the right turn is ended. The reference traveling data is data based on, for example, the manual operation of the direction indicator 203, instead of the control of the direction indicator 203 by the operation control portion 2066. The same applies to the left turn and other driving operations. In a case where the right turn and the left turn are not distinguished, the reference traveling data is data measured including a predetermined period from a state where the direction indicator 203 is turned on for the motorcycle to turn right or left to a state where the direction indicator 203 is turned off after the right turn or the left turn is ended.

The teacher image group TI1 is associated with the driving operation of the right turn. The teacher image group TI2 is associated with the driving operation of the left turn. The teacher image group TI3 is associated with the driving operation of the right lane change. The teacher image group TI4 is associated with the driving operation of the left lane change. The teacher image group TI5 is associated with the other (for example, straight progress) driving operation. In a case where the right turn and the left turn are not distinguished, the teacher image group TI1 and the teacher image group TI2 are associated with the driving operation of "the motorcycle 101 is turned".

The learning model 20621 is learned by a general machine learning method such as a method of using a neural network. More specifically, the learning model 20621 is a learning model using a two-dimensional convolutional neural network. The learning model 20621 may be a learning model using a one-dimensional convolutional neural network. By performing one-dimensional convolution, it is possible to perform calculation at high speed. In addition, the learning model 20621 may be configured as a single learning model or may be configured as a learning model in which a plurality of learning models is combined.

When the input image is input, the learning model 20621 extracts a feature amount of the input image by performing convolution with a filter (kernel) on the input image in step S501.

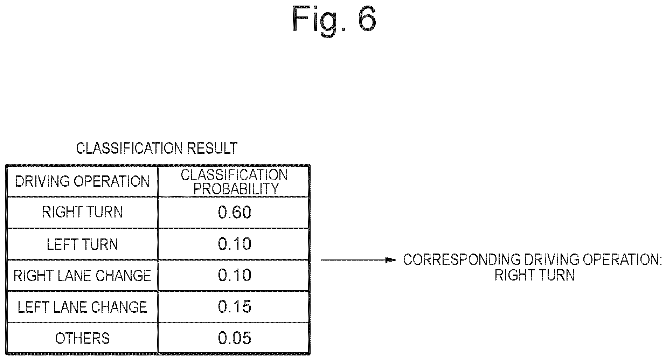

In step S502, the learning model 20621 classifies the input image based on the feature amount and generates a classification result. The classification result is illustrated as a classification probability, which is a probability that the input image is classified into each driving operation, as illustrated in Fig. 6.

In step S503, the learning model 20621 determines and outputs the corresponding driving operation based on the classification result. The corresponding driving operation is, for example, a driving operation having the highest classification probability. In the example of Fig. 6, the corresponding driving operation is the right turn. In step S504, the determination portion 2065 acquires the corresponding driving operation and the classification probability of the corresponding driving operation.

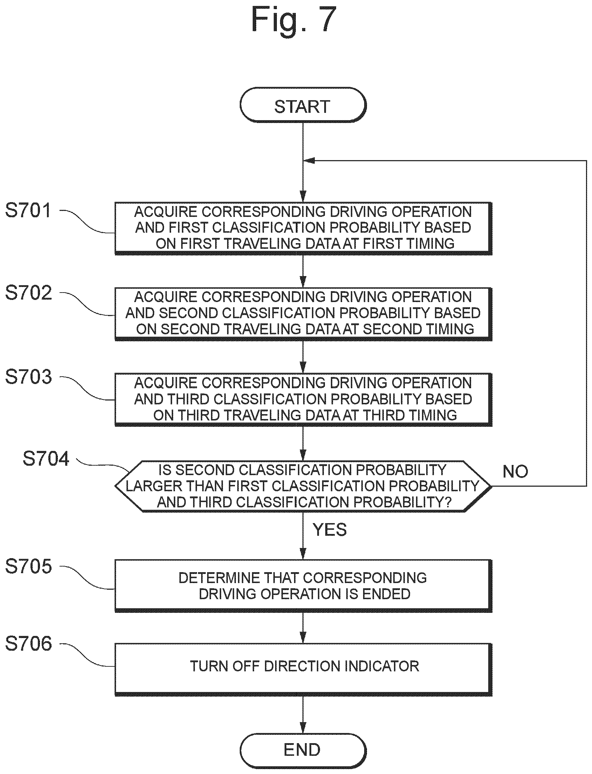

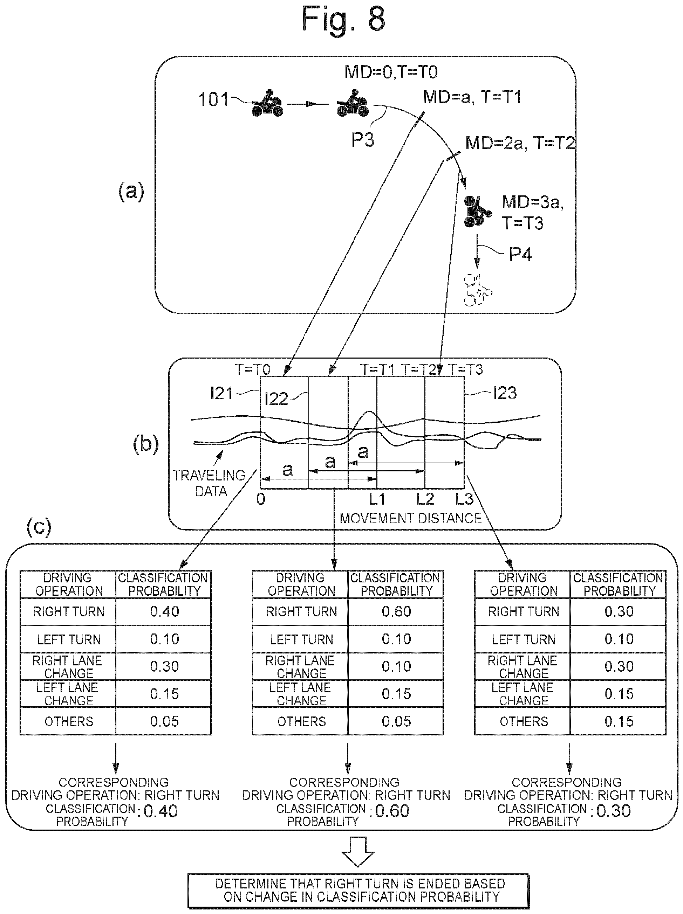

Through the processing up to this point, it is possible to determine the corresponding driving operation based on one piece of traveling data. It is possible to determine the end of the corresponding driving operation based on the plurality of corresponding driving operations individually determined. The end determination of the corresponding driving operation is described with reference to Figs. 7 and 8.

Fig. 7 is a flowchart of processing in the control unit 206. In step S701, the determination portion 2065 acquires the corresponding driving operation and a first classification probability based on the first traveling data at the first timing.

Here, examples of the first timing, the second timing, and the third timing used in the following description will be described with reference to Fig. 8.

Fig. 8(a) is a schematic diagram in a case where the motorcycle 101 turns right along the route P3. The motorcycle 101 performs the right turn by moving a length (L3) of the route P3 with respect to the movement distance at the start time point of the right turn (MD = 0). A time point at which the right turn is started is denoted by T = T0.

The conversion portion 2064 generates the input image based on the traveling data detected at a certain movement distance. Here, it is assumed that the conversion portion 2064 generates the input image based on the traveling data detected in a case where the motorcycle 101 moves a distance a. More specifically, as illustrated in Fig. 8(b), the input image is generated by extracting the traveling data using the window of the distance a. The traveling data is added according to the traveling, and the old data is excluded or deleted from the window of the distance a.

In the example of Fig. 8(a), a case where the input image is generated at timings of time points T = T1, T2, and T3, which are timings at which movement distances MD are L1, L2, and L3, respectively, will be described as an example. Specifically, at T = T1 (first timing), the input image I21 as illustrated in Fig. 8(b) is generated based on the traveling data (first traveling data) corresponding to the movement distance MD = 0 to L1. When the input image I21 is generated, the determination portion 2065 inputs the input image I21 to the learning model 20621 and acquires the corresponding driving operation and the classification probability (first classification probability) as illustrated in Fig. 8(c) from the learning model 20621. In a case of being based on the input image I21, the corresponding driving operation is "right turn", and the classification probability is "0.40". In this way, the processing of step S701 is performed.

Thereafter, the motorcycle 101 is moved, and the input image I22 is generated based on the traveling data (second traveling data) corresponding to the movement distance to the distance L2 at time point T = T2 (second timing) when the motorcycle 101 is moved to the distance L2. Based on the input image I22 as well, the corresponding driving operation and the classification probability (second classification probability) are acquired from the learning model 20621. In a case of being based on the input image I22, the corresponding driving operation is "right turn", and the classification probability is "0.60". In this way, in step S702, the determination portion 2065 acquires the corresponding driving operation and the second classification probability based on the second traveling data at the second timing.

Further, the motorcycle 101 is moved, and the input image I23 is generated based on the traveling data (third traveling data) corresponding to the movement distance to the distance L3 at time point T = T3 (third timing) when the motorcycle 101 is moved to the distance L3. Based on the input image I23 as well, the corresponding driving operation and the classification probability (third classification probability) are acquired from the learning model 20621. In a case of being based on the input image I23, the corresponding driving operation is "right turn", and the classification probability is "0.40". In this way, in step S703, the determination portion 2065 acquires the corresponding driving operation and the third classification probability based on the third traveling data at the third timing.

In step S704, the operation control portion 2066 determines whether the classification probability at the intermediate timing at the three timings, that is, the second classification probability is larger than the first classification probability and the third classification probability. In a case where the negative determination is made in step S704, the processing of steps S701 to S704 is repeated.

In a case where the positive determination is made in step S704, in step S705, the operation control portion 2066 determines that the corresponding driving operation is ended.

The reason why the above-described determination is able to be made in step S705 will be described. In a case where the right turn is performed as illustrated in Fig. 7(a), the traveling data close to the start of the right turn (for example, MD = from 0 to L1) is an operation that is slightly close to the reference traveling data used for learning the right turn. Since the degree (correlation) of matching between the traveling data and the reference traveling data is slightly small, the corresponding driving operation is the right turn, but the classification probability thereof is relatively small in the classification result.

Next, the traveling data in the middle of the right turn (for example, MD = from L1 to L2) is closer to the reference traveling data used for learning the right turn and better matches the reference traveling data. Therefore, in this case, the corresponding driving operation is the right turn, and the classification probability thereof is relatively high in the classification result.

Finally, the traveling data close to the end of the right turn (for example, MD = from L2 to L3) is an operation that is slightly close to the reference traveling data used for learning the right turn. Since the degree of matching between the traveling data and the reference traveling data is slightly small, the corresponding driving operation is the right turn, but the classification probability thereof is relatively small in the classification result.

That is, in a case where the classification probability of the right turn changes to a peak value at different movement distances, it is possible to determine that the motorcycle 101 has already performed the operation closest to the right turn. The fact that the motorcycle 101 performs the operation closest to the right turn means that the right turn is ended. Therefore, the operation control portion 2066 is able to determine that the corresponding driving operation (here, the right turn) is ended.

In step S706, the operation control portion 2066 turns off the direction indicator 203. In the example of Fig. 8, the direction indicator 203 is turned off at the time point of T = T3.

As described above, by turning off the direction indicator 203 based on the change in the classification probability in the determination using the traveling data of the motorcycle that is continuously measured over a predetermined period, the direction indicator 203 is able to be turned off at a natural timing after the right turn or the left turn of the motorcycle 101. Accordingly, since noise within the period is averaged by handling the data extracted with a width of the predetermined period instead of an instantaneous value, it is possible to reduce the possibility that the winker is turned off in the middle of the right turn or the left turn.

A second embodiment will be described. In the second and subsequent embodiments, the description of the common matters with those of the first embodiment will be omitted, and only the different points will be described. In particular, the same effects of the same configuration will not be mentioned for each embodiment.

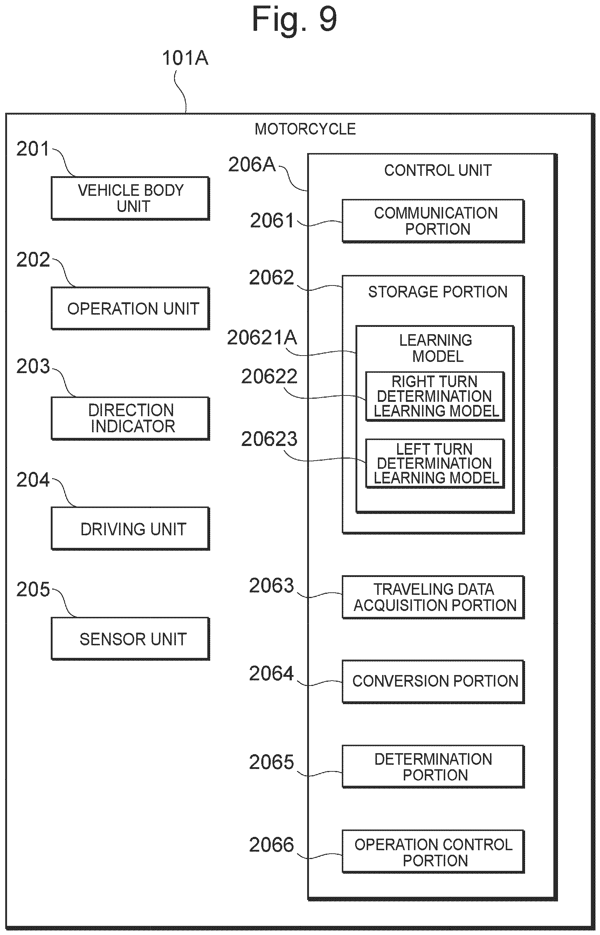

Fig. 9 is a block diagram of a motorcycle 101A according to the second embodiment. The motorcycle 101A according to the second embodiment is different from the motorcycle 101 according to the first embodiment in that a learning model 20621A has a right turn determination learning model 20622 (first learning model) and a left turn determination learning model 20623 (second learning model). The right turn determination learning model 20622 is, for example, a model specialized for the right turn determination, and is learned to determine the right turn, the right lane change, and others in the driving operation of the motorcycle 101A. Similarly, the left turn determination learning model 20623 is learned to determine the left turn, the left lane change, and others in the driving operation of the motorcycle 101A.

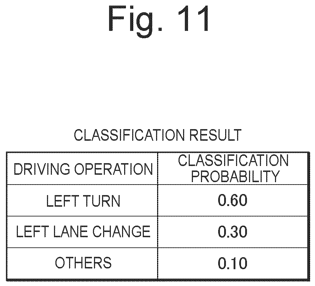

First, a case where the motorcycle 101A turns left will be described as an example. Processing of step (a1) and step (b1) is the same as the processing of step (a) and step (b) in the first embodiment, respectively. In step (c1), the determination portion 2065 inputs a certain input image (for example, the input image 111) to the left turn determination learning model 20623. In step (d1), the left turn determination learning model 20623 calculates the classification probability of the driving operation and determines the driving operation (left turn) of the motorcycle based on the classification probability. Fig. 11 illustrates an example of a classification result in the case of the left turn. In step (e1), the end timing of the left turn is estimated based on the change in the classification probability. In step (f1), the control of the operation of the motorcycle 101A is performed, and the direction indicator 203 is turned off based on the end timing. Even in a case where the motorcycle 101A turns right, the processing from step (a2) to step (f2) is repeated, and the direction indicator 203 is finally turned off based on the input images I31, I32, and I33.

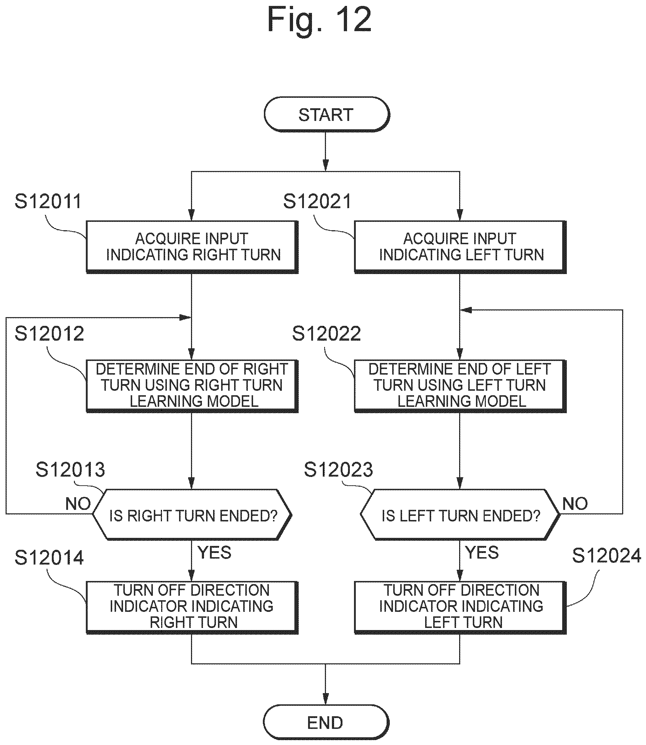

Processing of a control unit 206A in the second embodiment will be described with reference to Fig. 12. In the motorcycle 101A, in a case where the operation of turning on the direction indicator 203 is performed, the determination using the learning model 20621A is performed. In the control unit 206A, in a case where the direction indicator 203 indicates the right turn, processing of steps S12011 to S12014 is performed. In this case, in step S12011, the control unit 206A acquires an input indicating the right turn from the operation unit 202 or the direction indicator 203.

In step S12012, the determination portion 2065 and the operation control portion 2066 determine the end of the right turn using the right turn determination learning model 20622. The determination portion 2065 and the operation control portion 2066 perform the determination of the corresponding driving operation (here, the right turn) and the determination of the end of the right turn, in the same manner as the method described in the first embodiment. In step S12013, the determination portion 2065 and the operation control portion 2066 determine whether the right turn is ended. When a negative determination is made in step S12013, the processing returns to step S12012. When a positive determination is made in step S12013, in step S12014, the operation control portion 2066 turns off the direction indicator 203 indicating the right turn.

Similarly, in the control unit 206A, in a case where the direction indicator 203 indicates the left turn, processing of steps S12021 to S12024 is performed. In this case, in step S12021, the control unit 206A acquires an input indicating the left turn from the operation unit 202 or the direction indicator 203. In step S12022, the determination portion 2065 and the operation control portion 2066 determine the end of the left turn using the left turn determination learning model 20623. The determination portion 2065 and the operation control portion 2066 perform the determination of the corresponding driving operation (left turn) and the determination of the end of the left turn in the same manner as in the method described in the first embodiment. In step S12023, the determination portion 2065 and the operation control portion 2066 determine whether the left turn is ended. When the negative determination is made in step S12024, the processing returns to step S12023. When the positive determination is made in step S12023, in step S12024, the operation control portion 2066 turns off the direction indicator 203 indicating the left turn.

The movement distance in the case of the left turn and the movement distance in the case of the right turn are different from each other, for example, as illustrated in the routes P1 and P3. In a case of left-side passage, the movement distance of the left turn is shorter than the movement distance of the right turn, and in a case of right-side passage, the movement distance of the right turn is often shorter than the movement distance of the left turn. In a case where the required movement distances until the operation is completed by the right turn and the left turn are different, the determination accuracy is able to be improved by determining the right turn and the left turn by different learning models as in the case of the motorcycle 101A. In addition, it is possible to exclude the unnecessary movement (right turn operation when turning left) in the opposite direction from the determination.

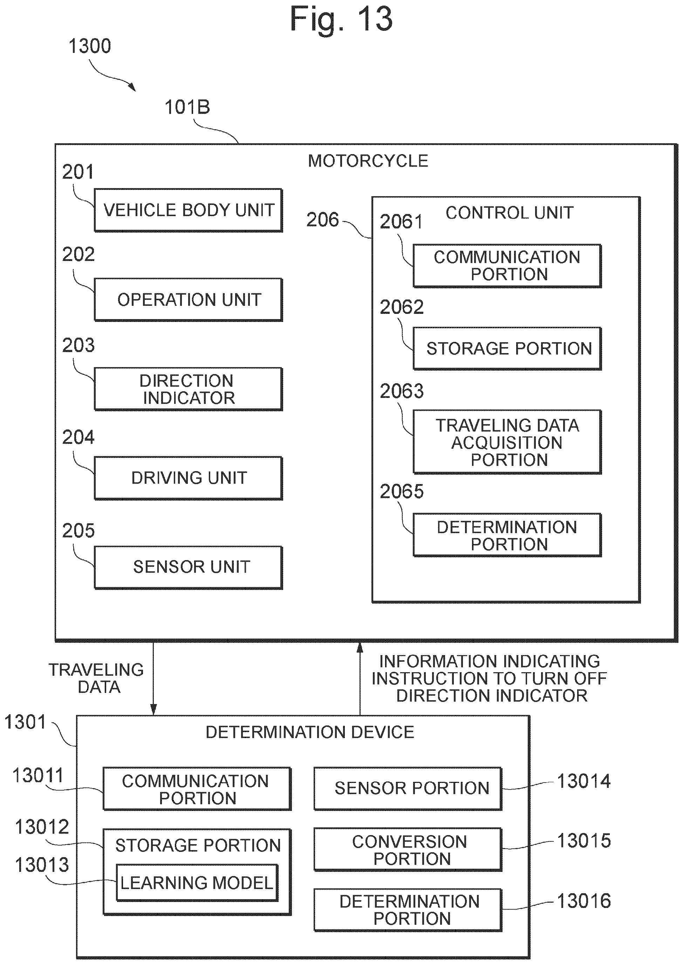

A third embodiment will be described with reference to Fig. 13. Fig. 13 is a block diagram of a motorcycle control system 1300 according to the third embodiment. The motorcycle control system 1300 includes a motorcycle 101B and a determination device 1301.

In the motorcycle control system 1300, the conversion portion 2064, the determination portion 2065, and the learning model 20621 of the motorcycle 101 are realized in the determination device 1301 outside the motorcycle 101B. The determination device 1301 includes a communication portion 13011 that communicates with the outside, a storage portion 13012 that stores various types of information, a learning model 13013, a sensor portion 13014, a conversion portion 13015, and a determination portion 13016. Functions of the learning model 13013, the conversion portion 13015, and the determination portion 13016 are the same as the functions of the learning model 20621, the conversion portion 2064, and the determination portion 2065 described in the first embodiment. The determination device 1301 is, for example, an information processing device such as a smartphone that is able to communicate with the motorcycle 101B. The storage portion 13012 may store a dedicated application for realizing the functions of the learning model 13013, the sensor portion 13014, the conversion portion 13015, and the determination portion 13016.

In this case, the operation control portion 2066 transmits the traveling data acquired by the traveling data acquisition portion 2063 to the determination device 1301, and acquires information indicating an instruction to turn off the direction indicator from the determination device 1301. In this case, the determination portion 13016 may use the data acquired by the sensor portion 13014 in combination. Thereafter, the operation control portion 2066 controls the direction indicator 203 in the same manner as in the first embodiment. By adopting a form in which the determination of the corresponding driving operation is performed using the determination device 1301 and the information indicating the instruction to turn off the direction indicator is transmitted to the motorcycle 101, it is not necessary to store the learning model 20621 in the motorcycle 101. Accordingly, it is possible to easily provide the function of determining the corresponding driving operation or automatically turning off the direction indicator 203 as described in the first embodiment. In addition, it is possible to make up for the lacking sensor with the sensor of the determination device.

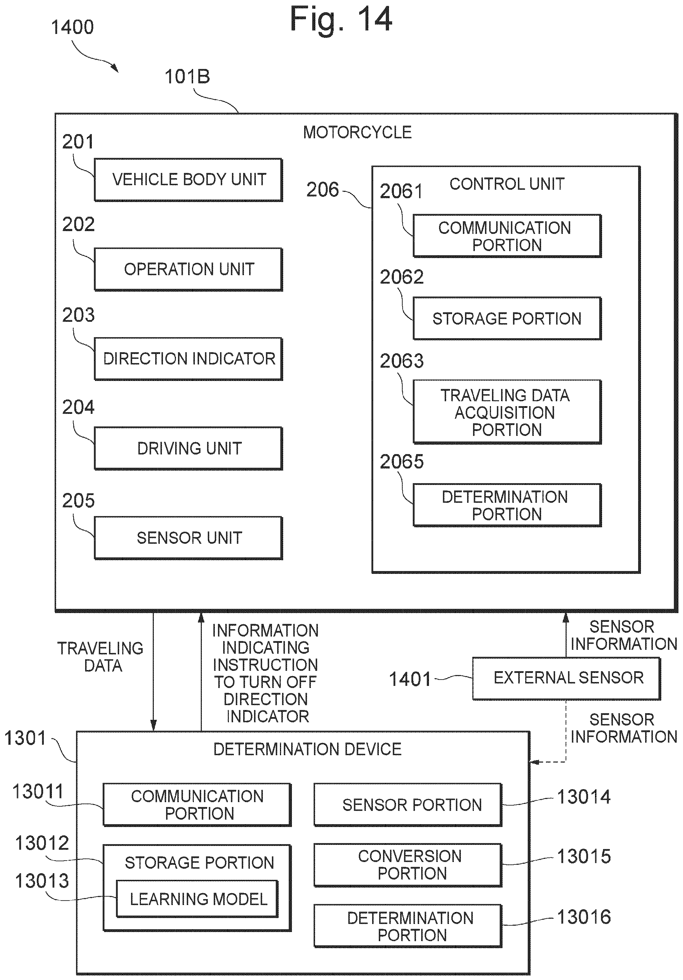

In addition, as in a motorcycle control system 1400 illustrated in Fig. 14, the traveling data acquisition portion 2063 may acquire sensor information from an external sensor 1401 outside the motorcycle 101B, in addition to the information from the sensor unit 205. For example, in a case where the sensor unit 205 does not have a function of detecting the inclination of the motorcycle 101B, the motorcycle 101B may acquire information indicating the inclination of the motorcycle 101B from the external sensor 1401 connected to the motorcycle 101B in a wired manner. Alternatively, the external sensor 1401 may be a camera or a radar device. By acquiring the information necessary for the determination from the outside of the motorcycle 101B, it is possible to provide these functions even in a case where the configuration of the sensor unit 205 is insufficient to provide the functions of determining the corresponding driving operation and automatically turning off the direction indicator 203. In addition, the external sensor 1401 may directly transmit the sensor information or the traveling data to the determination device 1301 by wireless communication.

The supplementary description will be made for the motorcycles 101, 101A, and 101B according to the first to third embodiments. In the following description, the motorcycle 101 according to the first embodiment will be described as an example, but the following description is also applicable to the motorcycle 101A according to the second embodiment and 101B according to the third embodiment. In the motorcycle 101, the reference traveling data is described as data measured including, for example, a predetermined period from a state where the motorcycle turns on the direction indicator 203 for the right turn to a state where the direction indicator 203 is turned off after the right turn is completed. In the motorcycle 101, straight progress movement is performed for a certain period of time after the direction indicator 203 is turned on, and data related to the straight progress movement is not necessary. The predetermined period may be, for example, a certain period including a period in which the right and left turn operation of the motorcycle 101 is performed, which is traced back from a time point at which the direction indicator 203 is turned off to a time point after a time point at which the direction indicator 203 is turned on.

In addition, in the first embodiment, each of the teacher image groups TI1, TI2, TI3, TI4, and TI5 is described as being associated with each driving operation. Here, in a case where a predetermined period is set based on the operation of the direction indicator 203 and data is acquired, a straight progress does not usually involve the operation of the direction indicator 203, and thus the data cannot be actually acquired. Therefore, since the actual measurement values of the various sensors are almost constant during the straight progress, this may be simulatively created by the information processing device, and the created data may be used instead as the teacher image group.

In addition, the learning model 20621 may be a learning model using an image transformer (Vision Transformer).

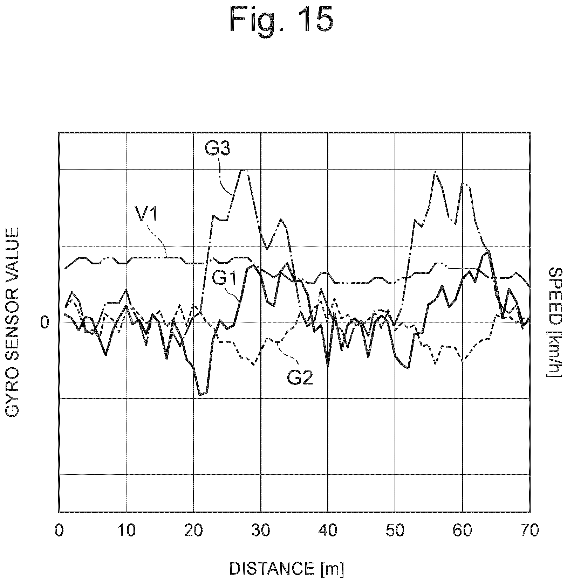

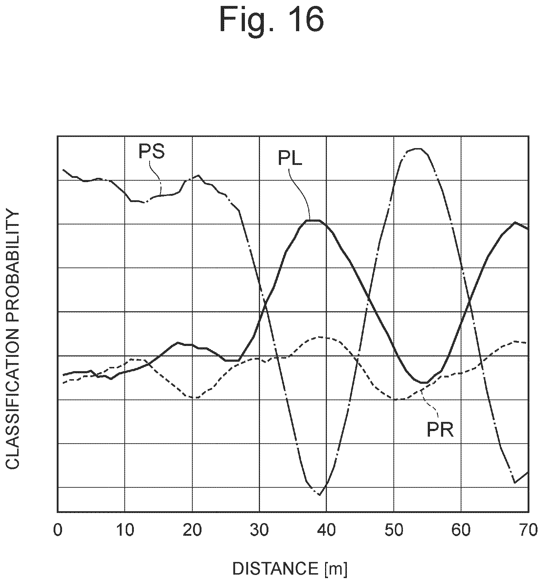

In addition, in the first embodiment, in a case where the classification probability of the right turn is changed to have a peak value, a case where the corresponding driving operation (here, the right turn) is determined to be ended is described as an example. Here, the description will be supplemented using a case of the left turn as an example. In Fig. 15, in a case where the left turn operation is performed twice, sensor values of each axis (x-axis: proceeding direction, y-axis: right hand in the proceeding direction, z-axis: perpendicular to the x-axis and the y-axis toward a ground direction) and a speed by a gyro sensor are illustrated. In Fig. 15, a gyro sensor value G1 of the x-axis, a gyro sensor value G2 of the y-axis, a gyro sensor value G3 of the z-axis, and a speed V1 are respectively illustrated. In Fig. 15, the left turn operation of inclining the vehicle body is illustrated as a variation of the value of the gyro sensor value G3. Fig. 16 illustrates the classification probability calculated by the determination portion 2065 in a case where the movement of Fig. 15 is performed.

Here, the determination portion 2065 may calculate the classification probability by classifying the image data illustrated in Fig. 15 as one image data, or may calculate the classification probability by inputting each of a plurality of images which is plotted based on each value of each axis of the gyro sensor and an image which is plotted based on the speed.

Fig. 16 illustrates a classification probability PS of the driving operation including the straight progress, a classification probability PL of the left turn, and a classification probability PR of the right turn, other than the right and left turn. The classification probability PL of the left turn increases as the gyro sensor value G3 in Fig. 15 increases. The classification probability PL of the left turn has a peak value at a position where the correlation between the input image and the pre-learned image is maximized after the gyro sensor value G3 is decreased, that is, at a position where the direction indicator 203 is turned off. In Fig. 16, the peak occurs in the vicinity of a distance of 40 m, then decreases, and occurs again in the vicinity of 70 m. That is, it is indicated that the left turn operation is performed twice.

The determination portion 2065 determines the driving operation such as straight progress or right and left turn based on the change in the classification probability. The operation of turning off the direction indicator 203 is controlled based on the fact that the classification probability PL of the left turn has a peak value. In addition, the operation of turning off the direction indicator 203 may be a point at which the classification probability of the straight progress becomes the maximum among the classification probabilities after the classification probability of the left turn or the right turn becomes the maximum instead of a point at where the classification probability of the left turn or the right turn becomes maximum. In this way, it is possible to suppress the variation of the maximum value that is easily affected by the road noise due to the road noise, and to suppress the variation of the turn-off determination timing. Such a determination is able to be made by setting a predetermined period as the acquisition range of the reference traveling data used for learning to a range that is not traced back from the time point when the direction indicator 203 is turned off, but is traced back based on the position before the time point.

In the above example, the value and the speed of the gyro sensor are used as the parameters. By considering the speed, it is possible to distinguish, for example, normal lane change that is performed without reducing the speed and movement at a low speed at an intersection. Accordingly, it is possible to turn off the direction indicator 203 at high speed only during the lane change without distinguishing between the right and left turn and the lane change.

In addition, in the first embodiment, the control unit 206 including the traveling data acquisition portion 2063 and the conversion portion 2064 may be provided in a steering portion (cockpit unit) provided with a meter or an electronic substrate for performing control or the like. Since the processing by the control unit 206 is less likely to be affected by the vibration of the steering portion, it is possible to install a sensor unit including the gyro sensor or the like in the steering portion.

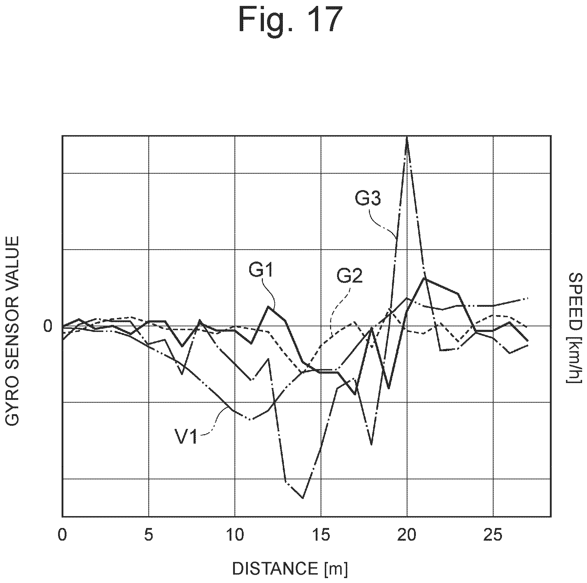

In addition, in the first embodiment, the conversion portion 2064 may generate an image in which the information is binarized according to the sensor value, and use the image for the determination by the determination portion 2065. In Fig. 17, in a case where a certain driving operation is performed, sensor values of each axis (x-axis: proceeding direction, y-axis: right hand in the proceeding direction, z-axis: perpendicular to the x-axis and the y-axis toward the ground direction) and a speed by the gyro sensor are illustrated as the gyro sensor value G1 of the x-axis, the gyro sensor value G2 of the y-axis, the gyro sensor value G3 of the z-axis, and the speed V1, respectively, in the same manner as in Fig. 15.

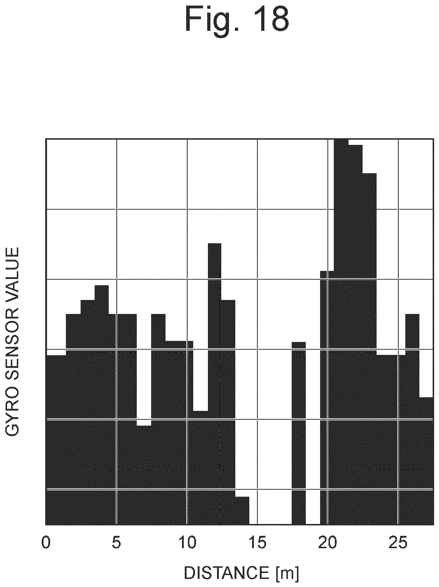

For example, as illustrated in Fig. 18 which is an example in which the gyro sensor value G1 of the x-axis is converted, the conversion portion 2064 may convert the sensor value into a binary value. In Fig. 18, a portion having a dark color is set to 1, and the other portions are set to 0. In this way, it is also possible to generate the information of the graph as an image having a predetermined number of pixels. The conversion portion 2064 may generate a plurality of images based on each gyro sensor value and speed, and the determination portion 2065 may use the generated images for the determination of the driving operation such as the straight progress or the right and left turn. In this case, the reference traveling data is also binarized and learned in the same manner. Further, by using an image in a state where the sensor value is binarized as an image of the integrated value using a cumulative function, the influence of the variation due to the road noise or the like may be offset by the cumulative function, and the occurrence of noise in the image and the deterioration of the determination accuracy may be suppressed. In addition, the conversion portion 2064 may use an image of the integrated value of the sensor values using the cumulative function based on the sensor values as illustrated in Fig. 17, instead of the image in the binarized state, for determining the driving operation such as the straight progress or the right and left turn.

Hereinabove, exemplary embodiments of the present invention are described. In the motorcycle 101, a program is stored that causes the motorcycle 101 to execute acquiring the traveling data of the motorcycle that is continuously measured for a predetermined period from at least one sensor, and determining the corresponding driving operation, which is the driving operation corresponding to the traveling data, based on the traveling data and a plurality of pieces of reference traveling data that is continuous for the predetermined period and are associated with each of a plurality of driving operations of the motorcycle.

By determining the driving operation of the motorcycle by using the traveling data of the motorcycle continuously measured for a predetermined period, it is possible to prevent the influence of the waiting time, and to mitigate the influence of the temporary noise even in a case where the temporary stop or the like is performed. Therefore, it is possible to increase the determination accuracy of the corresponding traveling state.

In addition, in the motorcycle 101, the plurality of driving operations include the right turn and the left turn of the motorcycle, and the operation control portion 2066 executes control of switching the direction indicator of the motorcycle from the on state to the off state based on the corresponding driving operation of either the right turn or the left turn.

In addition, the motorcycle 101 calculates the classification probability, which is a probability that the traveling data is classified into each of at least one driving operation based on the traveling data and the plurality of pieces of reference traveling data, and determines the corresponding driving operation based on the classification probability.

As a result, for example, by providing a condition for the classification probability of at least one driving operation, it is possible to determine the corresponding driving operation that is more suitable for the traveling data. Here, the condition is to set the driving operation associated with the maximum classification probability among the plurality of classification probabilities as the corresponding driving operation, or to set the driving operation associated with the classification probability exceeding a predetermined threshold value as the corresponding driving operation.

In the motorcycle 101, the determination portion 2065 determines the corresponding driving operation by inputting the input image as the traveling data to the learning model that is learned using the teacher data that uses the plurality of pieces of reference traveling data as an input and the driving operation associated with each of the plurality of pieces of reference traveling data as an output, and acquiring the corresponding driving operation as the output from the learning model. Accordingly, it is possible to increase the determination accuracy of the corresponding traveling state.

In the motorcycle 101A, the learning model 20621A includes the right turn determination learning model 20622 that determines the right turn and the left turn determination learning model 20623 that determines the left turn, the traveling data acquisition portion 2063 acquires information indicating an operation in a case where the motorcycle is caused to perform the right turn or the left turn, and the determination portion 2065 determines the corresponding driving operation using the first learning model in a case where the operation corresponds to the right turn and determines the corresponding driving operation using the second learning model in a case where the operation corresponds to the left turn.

Accordingly, even in a case where the required movement distances for the right turn and the left turn to complete the operation are different, the right turn and the left turn are able to be determined by different learning models, and the determination accuracy is able to be improved.

In the motorcycle 101, the plurality of driving operations further include the right lane change and the left lane change of the motorcycle, and the learning model 20621 is learned to distinguish between the right turn, the left turn, the right lane change, and the left lane change. It is possible to distinguish between the right lane change in which the operation of the direction indicator 203 is performed in the same manner as the right turn and the left lane change in which the operation of the direction indicator 203 is performed in the same manner as the left turn. Therefore, the determination accuracy of the corresponding driving operation is improved.

In the motorcycle 101, the traveling data includes the first traveling data acquired for the predetermined period from the first timing, the second traveling data acquired for the predetermined period from the second timing after the first timing, and the third traveling data acquired for the predetermined period from the third timing after the second timing, and the classification probability of the corresponding driving operation includes the first classification probability based on the first traveling data, the second classification probability based on the second traveling data, and the third classification probability based on the third traveling data.

In addition, in the motorcycle 101, the operation control portion 2066 acquires the classification probability, and controls the operation of the motorcycle based on the corresponding driving operation at a time point after the third timing in a case where the second classification probability is larger than the first classification probability and the third classification probability.

Accordingly, it is possible to determine the end of the corresponding driving operation by setting the second classification probability in the middle as the peak as the timing. For example, the classification probability (first classification probability) of the right turn at the start of the right turn (first timing) is smaller than the classification probability (second classification probability) of the right turn in the middle of the right turn (second timing). In addition, the classification probability (third classification probability) of the right turn at the end of the right turn (third timing) is also smaller than the second classification probability. As described above, since the learning data is data for a certain period from the turn-off timing, the end of the corresponding driving operation is determined based on the change in the classification probability, which is the similarity, and thus, for example, the direction indicator 203 is able to be turned off at a more natural timing for the driver.

In the motorcycle 101, the conversion portion 2064 generates the input two-dimensional data based on the traveling data, and the determination portion 2065 determines the corresponding driving operation, which is the driving operation corresponding to the traveling data, based on the input two-dimensional data and the plurality of pieces of reference traveling data, with the input two-dimensional data as the traveling data. As a result, even in a case where the traveling data includes a plurality of variables, it is possible to incorporate the correlation between the variables by using the traveling data as, for example, one image. By performing the determination using the plurality of variables, the determination accuracy of the corresponding driving operation is improved.

In the motorcycle 101, in a case where the traveling data is one-dimensional data, the conversion portion 2064 converts the traveling data into two-dimensional data, and the input image is converted input data based on the traveling data converted into the two-dimensional data. As a result, even in a case where the sensor is able to acquire only one variable, it is possible to determine the corresponding driving operation using the two-dimensional data.

In the motorcycle 101, the predetermined period is a range in which the motorcycle is required to move a predetermined distance. By basing on the distance instead of the time, the influence of the driving operation, which is affected by the time, such as the temporary stop of the motorcycle 101, and does not lead to the procession of the motorcycle 101, is able to be suppressed.

In addition, the motorcycle 101 further includes the communication portion 2061 that acquires information used for updating the learning model 20621 from a terminal outside the motorcycle 101 and updates the learning model 20621. Accordingly, the learning model is able to be easily updated.

In addition, in the motorcycle 101, the storage portion 2062 stores a learning model that is learned using teacher data that uses the plurality of pieces of reference traveling data of the motorcycle continuous for a predetermined period as an input and the driving operation associated with each of the plurality of pieces of reference traveling data as an output, and the control unit 206 is caused to function to output the corresponding driving operation which is the driving operation corresponding to the traveling data in response to the input of the traveling data of the motorcycle measured continuously for the predetermined period.

In the motorcycle 101, the plurality of pieces of reference traveling data may include data acquired for a period traced back from a time point when the direction indicator of the motorcycle is switched from the on state to the off state.

The plurality of pieces of reference traveling data may include data acquired for a period traced back from a time point before the time point when the direction indicator of the motorcycle is switched from the on state to the off state. In this case, the operation control portion 2066 may acquire the classification probability, and may control the operation of the motorcycle based on the corresponding driving operation at a time after the second timing in a case where the first classification probability indicates the right turn or the left turn, the second classification probability indicates the straight progress, and the second classification probability is larger than the first classification probability. As described above, in a case where the plurality of pieces of reference traveling data are acquired for a period traced back from a time point before the time point when the direction indicator is switched from the on state to the off state, it is possible to suppress variation of the maximum value of the classification probability that is easily affected by the road noise due to the road noise and to suppress variation of the turn-off determination timing.

In the motorcycle 101, the conversion portion 2064 may convert the traveling data into the integrated value by the cumulative function to generate the input two-dimensional data. As a result, the influence of the variation due to the road noise or the like is offset by the cumulative function, and the occurrence of noise in the image and the deterioration of the determination accuracy are able to be suppressed.

In the motorcycle 101, the reference traveling data may include data generated by the information processing device, unlike the data obtained by actual traveling. As a result, even in a case where the data cannot be actually acquired, the data is able to be generated and used for machine learning.

In the motorcycle 101, the traveling data acquisition portion 2063 and the determination portion 2065 may be provided in the steering portion of the motorcycle 101. Further, the traveling data and the reference traveling data may be data acquired from the gyro sensor and the speed sensor provided in the steering portion.

Each embodiment described above is for facilitating the understanding of the present invention, and is not for limiting the interpretation of the present invention. The present invention is able to be changed/improved without departing from the gist thereof, and the present invention also includes equivalents thereof. That is, even in a case where each embodiment is appropriately modified by those skilled in the art, as long as the modified embodiment has the features of the present invention, the modified embodiment is included in the scope of the present invention. For example, each element and the disposition, conditions, shape, size, and the like provided in each embodiment are not limited to the exemplified ones and are able to be appropriately changed. In addition, the program described in the above-described embodiments is able to be stored in a storage medium. The storage medium storing the program may be a non-transitory computer readable medium. The non-transitory computer readable medium is not limited particularly but may be a storage medium such as a USB memory or a CD-ROM, for example. In addition, each embodiment is merely an example, and it goes without saying that partial substitution or combination of the configurations illustrated in different embodiments is possible, and these are also included in the scope of the present invention as long as they include the features of the present invention.
<1> A program causing a computer to execute:
   acquiring traveling data of a motorcycle that is continuously measured for a predetermined period from at least one sensor; and
   determining a corresponding driving operation, which is a driving operation corresponding to the traveling data, based on the traveling data and a plurality of pieces of reference traveling data that is continuous for the predetermined period and is associated with each of a plurality of driving operations of the motorcycle.
<2> The program according to <1>, in which the plurality of driving operations includes a right turn and a left turn of the motorcycle, and
   the program further causes the computer to execute performing control of switching a direction indicator of the motorcycle from an on state to an off state based on the corresponding driving operation of either the right turn or the left turn.
<3> The program according to <1> or <2>, in which the determining includes
   calculating a classification probability, which is a probability that the traveling data is classified into each of the plurality of driving operations based on the traveling data and the plurality of pieces of reference traveling data, and determining the corresponding driving operation based on the classification probability.
<4> The program according to any one of <1> to <3>, in which the determining includes
   determining the corresponding driving operation by inputting the traveling data to a learning model that is trained to distinguish between a right turn and a left turn using teacher data that uses the plurality of pieces of reference traveling data as an input and a driving operation associated with each of the plurality of pieces of reference traveling data as an output, and acquiring the corresponding driving operation as an output from the learning model.
<5> The program according to <4>, in which the learning model includes a first learning model that determines the right turn and a second learning model that determines the left turn,
   the computer is caused to further execute acquiring information indicating an operation when the motorcycle performs the right turn or the left turn, and
   in the determining,
   the corresponding driving operation using the first learning model is determined when the operation corresponds to the right turn, and
   the corresponding driving operation using the second learning model is determined when the operation corresponds to the left turn.
<6> The program according to <4> or <5>, in which the plurality of driving operations further include a right lane change and a left lane change of the motorcycle, and
   the learning model is learned to distinguish between the right turn, the left turn, the right lane change, and the left lane change.
<7> The program according to <3>, in which the traveling data includes
   first traveling data acquired for the predetermined period from a first timing, second traveling data acquired for the predetermined period from a second timing after the first timing, and third traveling data acquired for the predetermined period from a third timing after the second timing,
   a classification probability of the corresponding driving operation includes
   a first classification probability based on the first traveling data, a second classification probability based on the second traveling data, and a third classification probability based on the third traveling data, and
   the controlling further executes controlling an operation of the motorcycle based on the corresponding driving operation at a time after the third timing when the classification probability is acquired and the second classification probability is larger than the first classification probability and the third classification probability.
<8> The program according to <1> to <7>, in which the computer is caused to further execute
   generating input two-dimensional data based on the traveling data, and
   in the determining,
   the corresponding driving operation, which is the driving operation corresponding to the traveling data is determined based on the input two-dimensional data and the plurality of pieces of reference traveling data, with the input two-dimensional data as the traveling data, and the corresponding driving operation, which is the driving operation corresponding to the traveling data is determined based on the input two-dimensional data and the plurality of pieces of reference traveling data, with the input two-dimensional data as the traveling data.
<9> The program according to <8>, in which the computer is caused to further execute
   converting the traveling data into two-dimensional data when the traveling data is one-dimensional data, and
   the input two-dimensional data is data based on the traveling data converted into the two-dimensional data.
<10> The program according to any one of <1> to <9>, in which the predetermined period is a range required for the motorcycle to move a predetermined distance.
<11> A device including:
   an acquisition unit configured to acquire traveling data of a motorcycle that is continuously measured for a predetermined period from at least one sensor; and
   a determination portion configured to determine a corresponding driving operation corresponding to the traveling data, based on the traveling data and a plurality of pieces of reference traveling data that is continuous for the predetermined period and is associated with each of a plurality of driving operations of the motorcycle.
<12> The device according to <11>, in which the determination portion
   determines the corresponding driving operation by inputting the traveling data to a learning model that is learned using teacher data that uses the plurality of pieces of reference traveling data as an input and a driving operation associated with each of the plurality of pieces of reference traveling data as an output, and acquiring the corresponding driving operation as an output from the learning model, and
   the device further includes
   a communication portion configured to acquire information used for updating the learning model from a terminal outside the device and updates the learning model.
<13> The device according to <11> or <12>, in which the acquisition unit acquires at least a part of the traveling data from a terminal capable of communicating with the acquisition unit.
<14> The device according to any one of <11> to <13>, in which the acquisition unit acquires at least a part of the traveling data from a radar or a camera.
<15> The device according to any one of <11> to <14>, in which the plurality of driving operations include a right turn and a left turn of the motorcycle, and
   the device further includes
   an operation control portion configured to switch a direction indicator of the motorcycle from an on state to an off state based on the corresponding driving operation of either the right turn or the left turn.
<16> The device according to <15>, in which the determination portion calculates a classification probability, which is a probability that the traveling data is classified into each of the plurality of driving operations based on the traveling data and the plurality of pieces of reference traveling data, and determines the corresponding driving operation based on the classification probability.
<17> The device according to <15> or <16>, in which the determination portion determines the corresponding driving operation by inputting the traveling data to a learning model that is trained to distinguish between a right turn of the motorcycle and a left turn of the motorcycle using teacher data that uses the plurality of pieces of reference traveling data as an input and a driving operation associated with each of the plurality of pieces of reference traveling data as an output, and acquiring the corresponding driving operation as an output from the learning model.
<18> The device according to <17>, in which the learning model includes a first learning model that determines the right turn and a second learning model that determines the left turn,
   the device further includes
   an acquisition unit configured to acquire information indicating an operation when the motorcycle performs the right turn or the left turn, and
   the determination portion
   determines the corresponding driving operation using the first learning model when the operation corresponds to the right turn, and
   determines the corresponding driving operation using the second learning model when the operation corresponds to the left turn.
<19> The device according to <17>, in which the plurality of driving operations further include a right lane change and a left lane change of the motorcycle, and
   the learning model is learned to distinguish between the right turn, the left turn, the right lane change, and the left lane change.
<20> The device according to any one of <15> to <19>, in which the plurality of pieces of reference traveling data include data acquired for a period traced back from a time point when the direction indicator of the motorcycle is switched from the on state to the off state.
<21> The device according to <20>, in which the traveling data includes
   first traveling data acquired for the predetermined period from a first timing, second traveling data acquired for the predetermined period from a second timing after the first timing, and third traveling data acquired for the predetermined period from a third timing after the second timing,
   a classification probability of the corresponding driving operation includes a first classification probability based on the first traveling data, a second classification probability based on the second traveling data, and a third classification probability based on the third traveling data, and
   the operation control portion, which switches the direction indicator of the motorcycle from the on state to the off state based on the corresponding driving operation of either the right turn of the motorcycle or the left turn of the motorcycle,
   controls an operation of the motorcycle based on the corresponding driving operation at a time after the third timing when the classification probability is acquired and the second classification probability is larger than the first classification probability and the third classification probability.
<22> The device according to any one of <15> to <19>, in which the plurality of pieces of reference traveling data include data acquired for a period traced back from a time point before a time point when the direction indicator of the motorcycle is switched from the on state to the off state.
<23> The device according to <22>, in which the traveling data includes
   first traveling data acquired for the predetermined period from a first timing, and second traveling data acquired for the predetermined period from a second timing after the first timing,
   a classification probability of the corresponding driving operation includes
   a first classification probability based on the first traveling data, and a second classification probability based on the second traveling data, and
   the operation control portion, which switches the direction indicator of the motorcycle from the on state to the off state based on the corresponding driving operation of either the right turn of the motorcycle or the left turn of the motorcycle, controls an operation of the motorcycle based on the corresponding driving operation at a time after the second timing when the classification probability is acquired, the first classification probability indicates the right turn or the left turn, the second classification probability indicates a straight progress, and the second classification probability is larger than the first classification probability.
<24> The device according to any one of <11> to <23>, further including
   a conversion portion configured to generate input two-dimensional data based on the traveling data,
   in which the determination portion determines the corresponding driving operation, which is a driving operation corresponding to the traveling data based on the input two-dimensional data and the plurality of pieces of reference traveling data, with the input two-dimensional data as the traveling data.
<25> The device according to <24>, in which the conversion portion converts the traveling data into two-dimensional data when the traveling data is one-dimensional data, and
   the input two-dimensional data is data based on the traveling data converted into the two-dimensional data.
<26> The device according to <24> or <25>, in which the conversion portion generates the input two-dimensional data by converting the traveling data into an integrated value by a cumulative function.
<27> The device according to any one of <11> to <26>, in which the predetermined period is a time range required for the motorcycle to move a predetermined distance.
<28> The device according to any one of <11> to <27>, in which the reference traveling data includes data generated by an information processing device, unlike data obtained by actual traveling.
<29> The device according to any one of <11> to <28>, in which the acquisition unit and the determination portion are provided on a steering portion of the motorcycle.
<30> The device according to <29>, in which the traveling data and the reference traveling data are data acquired from a gyro sensor and a speed sensor provided in the steering portion.
<31> A learning model that is learned using teacher data in which a plurality of pieces of reference traveling data of a motorcycle continuous for a predetermined period is input and a driving operation associated with each of the plurality of pieces of reference traveling data is output,
   the learning model causing a computer to function to output a corresponding driving operation, which is a driving operation corresponding to the traveling data in response to an input of traveling data of the motorcycle measured continuously for the predetermined period.
<32> The learning model according to <31>, in which the predetermined period is a time range required for the motorcycle to move a predetermined distance.
<33> A method including:
   via a computer,
   acquiring traveling data of a motorcycle that is continuously measured for a predetermined period from at least one sensor; and
   determining a corresponding driving operation corresponding to the traveling data, based on the traveling data and a plurality of pieces of reference traveling data that is continuous for the predetermined period and is associated with each of a plurality of driving operations of the motorcycle.
<34> The method according to <33>, in which the predetermined period is a time range required for the motorcycle to move a predetermined distance.

### Reference Signs List

101, 101A, 101B: motorcycle
203: direction indicator
205: sensor unit
206, 206A: control unit
1100: motorcycle control system
1101: determination device
1102: sensing terminal
2063: traveling data acquisition portion
2064: conversion portion
2065: determination portion
2066: operation control portion
20612: learning model

## Claims

1. A program causing a computer to execute:
acquiring traveling data of a motorcycle that is continuously measured for a predetermined period from at least one sensor; and
determining a corresponding driving operation, which is a driving operation corresponding to the traveling data, based on the traveling data and a plurality of pieces of reference traveling data that is continuous for the predetermined period and is associated with each of a plurality of driving operations of the motorcycle.

2. The program according to claim 1, wherein the plurality of driving operations includes a right turn and a left turn of the motorcycle, and
the program further causes the computer to execute performing control of switching a direction indicator of the motorcycle from an on state to an off state based on the corresponding driving operation of either the right turn or the left turn.

3. The program according to claim 1 or 2, wherein the determining includes
calculating a classification probability, which is a probability that the traveling data is classified into each of the plurality of driving operations based on the traveling data and the plurality of pieces of reference traveling data, and determining the corresponding driving operation based on the classification probability.

4. The program according to any one of claims 1 to 3, wherein the determining includes
determining the corresponding driving operation by inputting the traveling data to a learning model that is trained to distinguish between a right turn of the motorcycle and a left turn of the motorcycle using teacher data that uses the plurality of pieces of reference traveling data as an input and a driving operation associated with each of the plurality of pieces of reference traveling data as an output, and acquiring the corresponding driving operation as an output from the learning model.

5. The program according to claim 4, wherein the learning model includes a first learning model that determines the right turn and a second learning model that determines the left turn,
the computer is caused to further execute acquiring information indicating an operation when the motorcycle performs the right turn or the left turn, and
in the determining,
the corresponding driving operation using the first learning model is determined when the operation corresponds to the right turn, and
the corresponding driving operation using the second learning model is determined when the operation corresponds to the left turn.

6. The program according to claim 4 or 5, wherein the plurality of driving operations further include a right lane change and a left lane change of the motorcycle, and
the learning model is learned to distinguish between the right turn, the left turn, the right lane change, and the left lane change.

7. The program according to claim 3, wherein the traveling data includes
first traveling data acquired for the predetermined period from a first timing, second traveling data acquired for the predetermined period from a second timing after the first timing, and third traveling data acquired for the predetermined period from a third timing after the second timing,
a classification probability of the corresponding driving operation includes
a first classification probability based on the first traveling data, a second classification probability based on the second traveling data, and a third classification probability based on the third traveling data, and
the program further causes the computer to execute performing control of switching a direction indicator of the motorcycle from an on state to an off state based on the corresponding driving operation of either a right turn of the motorcycle or a left turn of the motorcycle, and control of an operation of the motorcycle based on the corresponding driving operation at a time after the third timing when the classification probability is acquired and the second classification probability is larger than the first classification probability and the third classification probability.

8. The program according to any one of claims 1 to 7, wherein the computer is caused to further execute
generating input two-dimensional data based on the traveling data, and
in the determining,
the corresponding driving operation, which is the driving operation corresponding to the traveling data, is determined based on the input two-dimensional data and the plurality of pieces of reference traveling data, with the input two-dimensional data as the traveling data.

9. The program according to claim 8, wherein the computer is caused to further execute
converting the traveling data into two-dimensional data when the traveling data is one-dimensional data, and
the input two-dimensional data is data based on the traveling data converted into the two-dimensional data.

10. The program according to any one of claims 1 to 9, wherein the predetermined period is a time range required for the motorcycle to move a predetermined distance.

11. A device comprising:
an acquisition unit configured to acquire traveling data of a motorcycle that is continuously measured for a predetermined period from at least one sensor; and
a determination portion configured to determine a corresponding driving operation corresponding to the traveling data, based on the traveling data and a plurality of pieces of reference traveling data that is continuous for the predetermined period and is associated with each of a plurality of driving operations of the motorcycle.

12. The device according to claim 11, wherein the determination portion
determines the corresponding driving operation by inputting the traveling data to a learning model that is learned using teacher data that uses the plurality of pieces of reference traveling data as an input and a driving operation associated with each of the plurality of pieces of reference traveling data as an output, and acquiring the corresponding driving operation as an output from the learning model, and
the device further comprises
a communication portion configured to acquire information used for updating the learning model from a terminal outside the device and updates the learning model.

13. The device according to claim 11 or 12, wherein the acquisition unit acquires at least a part of the traveling data from a terminal capable of communicating with the acquisition unit.

14. The device according to any one of claims 11 to 13, wherein the acquisition unit acquires at least a part of the traveling data from a radar or a camera.

15. The device according to any one of claims 11 to 14, wherein the plurality of driving operations include a right turn and a left turn of the motorcycle, and
the device further comprises
an operation control portion configured to switch a direction indicator of the motorcycle from an on state to an off state based on the corresponding driving operation of either the right turn or the left turn.

16. The device according to claim 15, wherein the determination portion calculates a classification probability, which is a probability that the traveling data is classified into each of the plurality of driving operations based on the traveling data and the plurality of pieces of reference traveling data, and determines the corresponding driving operation based on the classification probability.

17. The device according to claim 15 or 16, wherein the determination portion determines the corresponding driving operation by inputting the traveling data to a learning model that is trained to distinguish between a right turn of the motorcycle and a left turn of the motorcycle using teacher data that uses the plurality of pieces of reference traveling data as an input and a driving operation associated with each of the plurality of pieces of reference traveling data as an output, and acquiring the corresponding driving operation as an output from the learning model.

18. The device according to claim 17, wherein the learning model includes a first learning model that determines the right turn and a second learning model that determines the left turn,
the device further comprises
an acquisition unit configured to acquire information indicating an operation when the motorcycle performs the right turn or the left turn, and
the determination portion
determines the corresponding driving operation using the first learning model when the operation corresponds to the right turn, and
determines the corresponding driving operation using the second learning model when the operation corresponds to the left turn.

19. The device according to claim 17, wherein the plurality of driving operations further include a right lane change and a left lane change of the motorcycle, and
the learning model is learned to distinguish between the right turn, the left turn, the right lane change, and the left lane change.

20. The device according to any one of claims 15 to 19, wherein the plurality of pieces of reference traveling data include data acquired for a period traced back from a time point when the direction indicator of the motorcycle is switched from the on state to the off state.

21. The device according to claim 20, wherein the traveling data includes
first traveling data acquired for the predetermined period from a first timing, second traveling data acquired for the predetermined period from a second timing after the first timing, and third traveling data acquired for the predetermined period from a third timing after the second timing,
a classification probability of the corresponding driving operation includes
a first classification probability based on the first traveling data, a second classification probability based on the second traveling data, and a third classification probability based on the third traveling data, and
the operation control portion, which switches the direction indicator of the motorcycle from the on state to the off state based on the corresponding driving operation of either the right turn of the motorcycle or the left turn of the motorcycle,
controls an operation of the motorcycle based on the corresponding driving operation at a time after the third timing when the classification probability is acquired and the second classification probability is larger than the first classification probability and the third classification probability.

22. The device according to any one of claims 15 to 19, wherein the plurality of pieces of reference traveling data include data acquired for a period traced back from a time point before a time point when the direction indicator of the motorcycle is switched from the on state to the off state.

23. The device according to claim 22, wherein the traveling data includes
first traveling data acquired for the predetermined period from a first timing, and second traveling data acquired for the predetermined period from a second timing after the first timing,
a classification probability of the corresponding driving operation includes
a first classification probability based on the first traveling data, and a second classification probability based on the second traveling data, and
the operation control portion, which switches the direction indicator of the motorcycle from the on state to the off state based on the corresponding driving operation of either the right turn of the motorcycle or the left turn of the motorcycle, controls an operation of the motorcycle based on the corresponding driving operation at a time after the second timing when the classification probability is acquired, the first classification probability indicates the right turn or the left turn, the second classification probability indicates a straight progress, and the second classification probability is larger than the first classification probability.

24. The device according to any one of claims 11 to 23, further comprising:
a conversion portion configured to generate input two-dimensional data based on the traveling data,
wherein the determination portion determines the corresponding driving operation, which is a driving operation corresponding to the traveling data based on the input two-dimensional data and the plurality of pieces of reference traveling data, with the input two-dimensional data as the traveling data.

25. The device according to claim 24, wherein the conversion portion converts the traveling data into two-dimensional data when the traveling data is one-dimensional data, and
the input two-dimensional data is data based on the traveling data converted into the two-dimensional data.

26. The device according to claim 24 or 25, wherein the conversion portion generates the input two-dimensional data by converting the traveling data into an integrated value by a cumulative function.

27. The device according to any one of claims 11 to 26, wherein the predetermined period is a time range required for the motorcycle to move a predetermined distance.

28. The device according to any one of claims 11 to 27, wherein the reference traveling data includes data generated by an information processing device, unlike data obtained by actual traveling.

29. The device according to any one of claims 11 to 28, wherein the acquisition unit and the determination portion are provided on a steering portion of the motorcycle.

30. The device according to claim 29, wherein the traveling data and the reference traveling data are data acquired from a gyro sensor and a speed sensor provided in the steering portion.

31. A learning model that is learned using teacher data in which a plurality of pieces of reference traveling data of a motorcycle continuous for a predetermined period is input and a driving operation associated with each of the plurality of pieces of reference traveling data is output,
the learning model causing a computer to function to output a corresponding driving operation, which is a driving operation corresponding to the traveling data in response to an input of traveling data of the motorcycle measured continuously for the predetermined period.

32. The learning model according to claim 31, wherein the predetermined period is a time range required for the motorcycle to move a predetermined distance.

33. A method comprising:
via a computer,
acquiring traveling data of a motorcycle that is continuously measured for a predetermined period from at least one sensor; and
determining a corresponding driving operation corresponding to the traveling data, based on the traveling data and a plurality of pieces of reference traveling data that is continuous for the predetermined period and is associated with each of a plurality of driving operations of the motorcycle.

34. The method according to claim 33, wherein the predetermined period is a time range required for the motorcycle to move a predetermined distance.
